# FASCICULE DE BREVET EUROPEEN

(11) **EP 2 750 973 B1**
(45) Date de publication et mention de la délivrance du brevet: **19.08.2015**
(21) Numéro de dépôt: 12756789.9
(22) Date de dépôt: 24.08.2012
(51) Int. Cl.: B64D 27/26, B64D 29/06

(54) **ENSEMBLE FORME PAR UN TURBOMOTEUR ET SON SYSTEME D'ATTACHE A UNE STRUCTURE D'AERONEF**
ANORDNUNG MIT EINEM STRAHLTRIEBWERK UND EINEM ENTSPRECHENDEN SYSTEM ZUR BEFESTIGUNG AN EINER FLUGZEUGSTRUKTUR
ASSEMBLY COMPRISING A JET ENGINE AND A CORRESPONDING SYSTEM FOR ATTACHMENT TO AN AIRCRAFT STRUCTURE

(30) Priorité: 01.09.2011 FR 1157747
(43) Date de publication de la demande: 09.07.2014
(73) Titulaire: Snecma, 75015 Paris (FR)
(72) Inventeur: GAILLOT, Mathieu, F-77550 Moissy-Cramayel Cedex (FR); BERTUCCHI, Jean, F-77550 Moissy-Cramayel Cedex (FR); LEYKO, Matthieu, F-77550 Moissy-Cramayel Cedex (FR)
(74) Mandataire: Boura, Olivier
(86) Numéro de dépôt international: PCT/FR2012/051930
(87) Numéro de publication internationale: WO 2013/030498

(56) Documents cités:
- EP-A1- 0 257 665
- GB-A- 2 202 588
- US-A- 5 275 357

## Description

### Arrière-plan de l'invention

L'invention se rapporte à un ensemble comprenant un turbomoteur et un système d'attache du turbomoteur à une structure d'un aéronef, et concerne plus particulièrement un capotage arrière réalisant un carénage aérodynamique d'un mât et d'attaches arrière faisant partie du système d'attache.

Un turbomoteur double flux présente une veine annulaire d'écoulement de flux primaire provenant d'un générateur de gaz et s'ouvrant à l'arrière autour d'un corps central et une veine annulaire d'écoulement de flux secondaire provenant d'une soufflante et délimitée par une structure de capot primaire et une structure de capot secondaire.

L'accrochage d'un tel turbomoteur à une structure d'aéronef, notamment à une voilure, est couramment réalisé au moyen d'un mât, dénommé aussi mât-réacteur ou pylône, et d'attaches avant et arrière reliant le mât à des points d'accrochage à l'avant et à l'arrière du turbomoteur, des bielles de reprise de poussée étant en outre prévues pour la transmission des efforts de poussée entre le turbomoteur et le mât. Les documents EP 0 257 665 A1 et US 5 275 357 A divulguent de tels dispositifs d'accrochage.

D'autres dispositifs d'attache et de transmission de poussée relient le mât à la structure d'aéronef portant le turbomoteur.

A l'arrière, un capotage arrière est prévu qui réalise un carénage aérodynamique, protège le mât vis-à-vis du flux primaire et recouvre les attaches arrière.

Le capotage arrière comprend deux parois latérales qui s'étendent le long et à proximité du mât de chaque côté de celui-ci et qui se prolongent vers l'arrière au-delà de l'ouverture arrière de la veine d'écoulement de flux primaire. A l'avant, le capotage arrière est disposé entre les structures de capot primaire et secondaire ou en sortie de la veine annulaire d'écoulement du flux secondaire. Au moins dans sa partie arrière exposée du côté intérieur au flux primaire, le capotage arrière est muni d'une semelle ou d'un plancher de protection thermique reliant ses parois latérales.

Dans des turbomoteurs actuellement couramment utilisés, tels que les turbomoteurs de type "CFM 56" de la société CFM International, l'espacement angulaire entre les points d'accrochage arrière du turbomoteur est suffisamment limité pour que le carénage aérodynamique adapté au mât recouvre les attaches et points d'accrochage arrière.

L'amélioration des performances des turbomoteurs conduit à envisager une augmentation importante de leurs dimensions, notamment de leur diamètre. Cette augmentation de diamètre, et l'augmentation de masse qui en résulte nécessite une implantation des points d'accrochage arrière telle que la distance entre ceux-ci devient sensiblement supérieure à la largeur du mât au niveau des attaches arrière.

Se pose alors le problème de réaliser un capotage arrière réalisant un carénage aérodynamique du mât et des attaches arrière et induisant des pertes de charge aussi faibles que possible pour ne pas affecter sensiblement la consommation spécifique de carburant ou SFC ("Specific Fuel Consumption") du turbomoteur.

### Objet et résumé de l'invention

L'invention a pour objet d'apporter une solution à ce problème et propose à cet effet un ensemble comprenant un turbomoteur et un système d'attache du turbomoteur à une structure d'aéronef,
ensemble dans lequel :
- le turbomoteur est à double flux avec une veine annulaire d'écoulement de flux primaire s'ouvrant à l'arrière autour d'un corps central et une veine annulaire d'écoulement de flux secondaire s'ouvrant à l'arrière entre un capot primaire et l'extrémité arrière d'un capot secondaire, et
- le système d'attache comprend un mât, au moins deux attaches arrière reliant le mât à deux points d'accrochage arrière du turbomoteur et un capotage arrière du mât recouvrant les attaches arrière, réalisant un carénage aérodynamique et ayant une partie arrière qui s'étend vers l'arrière au-delà de l'ouverture de la veine d'écoulement de flux primaire, la distance entre les points d'accrochage arrière étant sensiblement supérieure à la largeur du mât au niveau des attaches arrière,
ensemble dans lequel :
le capotage arrière comprend deux parois latérales ayant chacune une première partie s'étendant le long et à proximité du mât et se prolongeant vers l'arrière et une deuxième partie qui fait saillie latéralement par rapport à la première partie de paroi du côté extérieur de celle-ci, de manière à recouvrir les attaches arrière, et
les deuxièmes parties de paroi latérale du capotage arrière ont sensiblement une forme de bosse et se raccordent aux premières parties de paroi latérale le long de lignes de raccordement incurvées s'étendant entre des points avant et des points arrière situés sensiblement au niveau des bords longitudinaux intérieurs des premières parties de paroi latérale.

Ainsi, un carénage aérodynamique du mât et des attaches arrière peut être réalisé avec un impact réduit sur l'écoulement du flux secondaire.

De préférence, les deuxièmes parties de paroi latérale du capotage arrière se raccordent aux premières parties de paroi latérale le long de lignes de raccordement incurvées s'étendant vers l'arrière jusqu'à des points arrière situés au niveau ou à proximité du bord extérieur de l'ouverture de la veine annulaire d'écoulement du flux primaire.

Avantageusement alors, les deuxièmes parties de paroi latérale du capotage arrière sont profilées, notamment avec des profils incurvés de forme générale concave, pour favoriser localement un écoulement du flux secondaire vers l'intérieur et sous la partie arrière du capotage arrière. Cette disposition permet, d'une part, une meilleure protection de la partie arrière du capotage arrière vis-à-vis du flux primaire et, d'autre part, une optimisation de la poussée en dirigeant le flux primaire sous le mât vers le corps central.

De préférence encore, les deuxièmes parties de paroi latérale du capotage arrière se raccordent aux premières parties de paroi latérale le long de lignes de raccordement à partir de points avant situés à proximité du capot primaire sensiblement en regard du bord arrière du capot secondaire, de manière à minimiser l'impact sur l'écoulement du flux secondaire.

A cet égard, avantageusement, les deuxièmes parties de paroi latérale du capotage arrière occupent moins de 2 % de l'éjection de la veine d'écoulement du flux secondaire.

### Brève description des dessins

L'invention sera mieux comprise à la lecture de la description faite ci-après, à titre indicatif mais non limitatif, en référence aux dessins annexés, sur lesquels :
- la figure 1 est une vue en élévation latérale montrant partiellement et très schématiquement un ensemble comprenant un turbomoteur et son système d'attache à une structure d'aéronef ;
- la figure 2 est une vue arrière très schématique de la partie arrière de l'ensemble de la figure 1 ;
- les figures 3 et 4 sont deux vues très schématiques en perspective montrant la partie arrière de l'ensemble de la figure 1 muni de capots primaire et secondaire et d'un capotage inférieur arrière de mât et d'attaches arrière, selon un mode de réalisation ; et
- la figure 5 est une vue arrière très schématique de l'ensemble montré sur les figures 3 et 4.

### Description détaillée

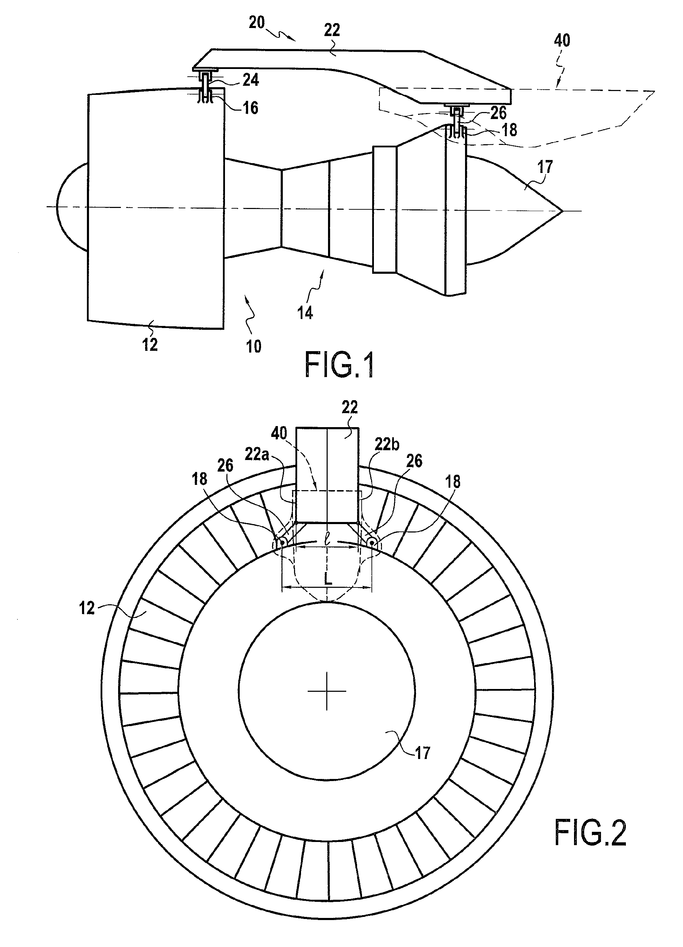

Les figures 1 et 2 montrent très schématiquement un turbomoteur double flux 10 et une partie d'un système 20 d'attache du turbomoteur à une structure d'aéronef, en l'espèce un système d'attache 20 permettant la suspension du turbomoteur sous une voilure par l'intermédiaire d'un mât 22. Les dispositifs de liaison du mât à la voilure ne sont pas représentés.

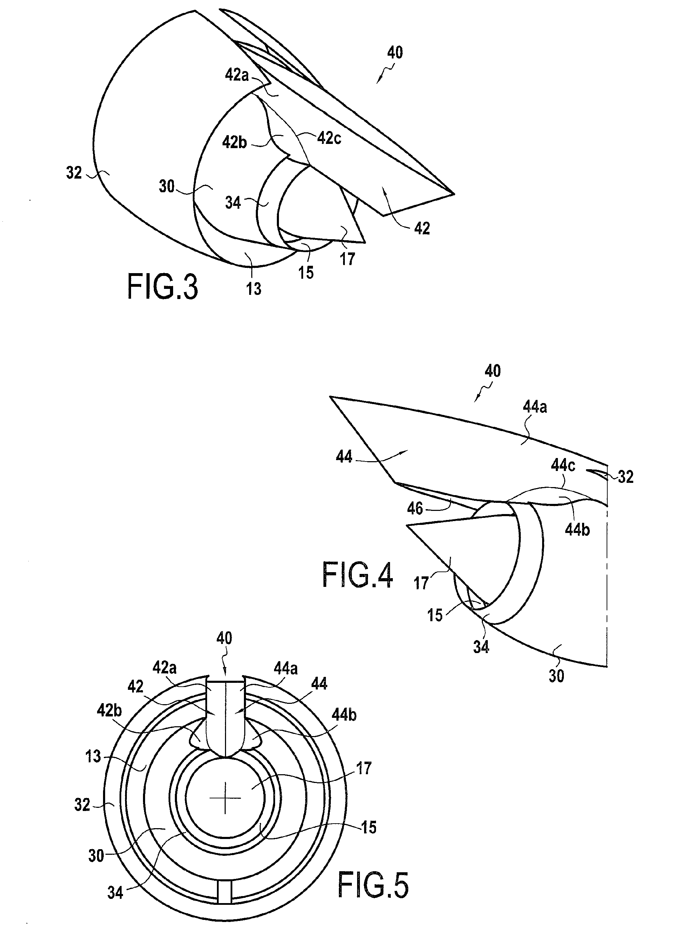

Le turbomoteur 10 comprend, de l'avant vers l'arrière, une soufflante 12 et un ensemble générateur de gaz 14 comportant un compresseur haute pression (HP), une chambre de combustion, une turbine HP et une turbine basse pression (BP). Un flux secondaire issu de la soufflante 12 s'écoule à l'extérieur du générateur de gaz 14 dans une veine annulaire 13 qui s'ouvre à l'arrière entre un capot primaire 30 et l'extrémité arrière d'un capot secondaire 32 (figures 3 à 5). Un flux primaire issu du générateur de gaz 14 s'écoule dans une veine annulaire 15 qui s'ouvre à l'arrière autour d'un corps central 17 (figures 3 à 5). Les capots primaire 30 et secondaire 32, qui font partie d'une nacelle du turbomoteur, ne sont pas représentés sur les figures 1 et 2. Du côté intérieur du capot primaire 30, une virole intérieure 34 peut être prévue qui délimite avec le capot primaire 30 un passage annulaire d'éjection d'air de ventilation utilisé pour le refroidissement d'équipements situés autour du générateur de gaz (figures 3 à 5).

Le mât 22, qui n'est pas représenté sur les figures 3 à 5, est relié au turbomoteur au moyen d'attaches avant 24 et arrière 26. Les attaches avant 24, par exemple sous forme de deux bras ou bielles, relient la partie avant du mât 22 à des points d'accrochage avant 16 situés sur le carter de la soufflante 12 ou sur un carter intermédiaire dans le cas d'un accrochage sur le compresseur basse pression. Les attaches arrière 26, par exemple également sous forme d'au moins deux bras ou bielles, relient la partie arrière du mât 22 à des points d'accrochage arrière 18 situés sur un carter à l'arrière du turbomoteur. Des bielles de reprise de poussée (non représentées) relient par exemple la partie arrière du mât 22 au carter de la soufflante 12 pour transmettre au mât 22 et, via celui-ci, à l'aéronef, l'effort de poussée produit par le turbomoteur.

Le mât 22 est associé à différents capotages réalisant des carénages aérodynamiques. Seul est représenté un capotage arrière 40 (montré par des traits interrompus sur les figures 1 et 2) qui est plus particulièrement visé par l'invention.

Le capotage 40 (figures 3 à 5) a une partie avant qui est située entre les capots primaire 30 et secondaire 32 et une partie arrière qui s'étend vers l'arrière au-delà de l'ouverture de la veine d'écoulement du flux primaire. Le capotage 40 comprend deux parois latérales 42, 44. Dans la partie avant du capotage 40 s'étendant jusqu'à l'ouverture de la veine d'écoulement du flux primaire, les parois 42, 44 ont des bords longitudinaux intérieurs qui épousent sensiblement le profil du capot primaire 30 et, éventuellement, de la virole intérieure 34 dans la partie de celle-ci s'étendant vers l'arrière au-delà de l'extrémité arrière du capot primaire 30. Dans la partie arrière du capotage, les parois 42, 44 sont reliées au niveau de leurs bords longitudinaux intérieurs par une semelle 46 en un matériau résistant à la chaleur, la semelle 46 remplissant une fonction de protection thermique vis-à-vis du flux primaire auquel elle est exposée. A l'extrémité arrière du capotage 40, les parois latérales 42, 44 se rejoignent.

Dans le cas en particulier de turbomoteurs de relativement grand diamètre, l'écartement entre les points d'accrochage arrière 18 est tel que la distance L entre ceux-ci est sensiblement supérieure à la largeur ℓ du mât 22 au niveau des attaches arrière 26 (figure 2), la largeur ℓ, ou épaisseur, étant la distance entre les faces latérales 22a, 22b du mât. Un capotage arrière limité avec des parois latérales s'étendant sensiblement radialement, à proximité et des deux côtés de la partie inférieure arrière du mât, ne peut alors recouvrir entièrement les attaches arrière 26. Un élargissement du capotage arrière en éloignant ses parois latérales des faces latérales du mât ne saurait convenir en raison de l'impact sur l'écoulement du flux secondaire, induisant une dégradation des performances en poussée.

Aussi, il est proposé de réaliser les parois latérales 42, 44 du capotage arrière avec des premières parties 42a, 44a qui s'étendent le long et à proximité de la partie inférieure arrière du mât 22, sur chaque côté de celui-ci et se prolongent vers l'arrière et des deuxièmes parties 42b, 44b faisant saillie latéralement du côté extérieur des premières parties de paroi 42a, 44a afin de recouvrir entièrement les attaches arrière 26, le capotage 40 était sensiblement symétrique par rapport à un plan longitudinal médian. Les deuxièmes parties 42b, 44b de paroi ont sensiblement des formes de bosses qui se raccordent aux premières parties le long de lignes de raccordement incurvées 42c, 44c s'étendant entre des points avant et arrière situés sensiblement au niveau des bords longitudinaux intérieurs des premières parties de paroi 42a, 44a.

Les lignes de raccordement 42c, 44c s'étendent de préférence jusqu'à des points arrière situés au niveau ou à proximité du bord extérieur de l'ouverture de la veine d'écoulement du flux primaire, en l'espèce au niveau ou à proximité du bord arrière du carter intermédiaire 34. Les deuxièmes parties 42b, 44b de paroi latérale sont exposées au flux secondaire. Du fait de leur forme arrondie se terminant en pointe aux extrémités de la ligne de raccordement avec les premières parties 42a, 44a de paroi latérale, les deuxièmes parties 42b, 44b de paroi latérale ont un impact limité sur l'écoulement du flux secondaire. De préférence, il est fait en sorte que ces deuxièmes parties 42b, 44b de paroi latérale occupent au maximum moins de 2 % de l'éjection de la veine d'écoulement de flux secondaire, c'est-à-dire moins de 2 % de la section d'éjection de la tuyère secondaire, hors capotage.

Afin de perturber le moins possible l'écoulement du flux secondaire, chaque deuxième partie 42b, 44b de paroi présente de préférence des profils incurvés de forme générale concave tant en section longitudinale (dans le sens d'écoulement du flux secondaire) qu'en section transversale (perpendiculairement au sens d'écoulement du flux secondaire). La courbure (inverse du rayon de courbure) le long des profils dans le sens d'écoulement du flux secondaire est de préférence supérieure à 2.10⁻⁴ mm⁻¹ tandis que la courbure le long des profils perpendiculairement au sens d'écoulement du flux secondaire est de préférence supérieure à 5.10⁻³ mm⁻¹.

Avantageusement, les deuxièmes parties 42b, 44b de paroi latérale sont profilées pour favoriser localement un écoulement du flux secondaire vers l'intérieur et sous la partie arrière du capotage arrière 40 ce qui permet, dans la région située sous cette partie arrière du capotage 40, de contribuer à "plaquer" le flux primaire contre le corps central 17, optimisant ainsi la poussée, et de protéger la semelle 46 du flux primaire. Cela résulte de la courbure définie plus haut des deuxièmes parties 42b, 44b de paroi latérale et de la concavité sur leurs parties arrière qui permettent d'avoir des chemins d'écoulement appropriés du flux secondaire le long des parties avant des lignes de raccordement entre deuxièmes parties de paroi 42b, 44b et premières parties de paroi 42a, 44a.

Les premières parties 42a, 44a de paroi latérale et la semelle 46 du capotage 40 peuvent être fixées au mât 22. Quant aux deuxièmes parties 42a, 44b de paroi latérale, elles peuvent être solidaires des premières parties ou être fixées au capot primaire 32.

On notera que la forme des deuxièmes parties 42a, 44b de paroi latérale permet d'avoir un impact limité non seulement sur l'écoulement du flux secondaire, mais aussi sur la masse totale du capotage arrière 40.

On notera aussi que le nombre d'attaches arrière pourra être supérieur à deux.

## Revendications

1. Ensemble comprenant un turbomoteur et un système d'attache du turbomoteur à une structure d'aéronef, ensemble dans lequel :
- le turbomoteur (10) est à double flux avec une veine annulaire (15) d'écoulement de flux primaire s'ouvrant à l'arrière autour d'un corps central (17) et une veine annulaire (13) d'écoulement de flux secondaire s'ouvrant à l'arrière entre un capot primaire (30) et l'extrémité arrière d'un capot secondaire (32), et
- le système d'attache (20) comprend un mât (22), au moins deux attaches arrière (26) reliant le mât à deux points d'accrochage arrière (18) du turbomoteur et un capotage arrière (40) du mât recouvrant les attaches arrière, réalisant un carénage aérodynamique et ayant une partie arrière qui s'étend vers l'arrière au-delà de l'ouverture de la veine d'écoulement de flux primaire, la distance entre les points d'accrochage arrière étant sensiblement supérieure à la largeur du mât au niveau des attaches arrière,
**caractérisé en ce que** le capotage arrière comprend deux parois latérales (42, 44) ayant chacune une première partie (42a, 44a) s'étendant le long et à proximité du mât et se prolongeant vers l'arrière et une deuxième partie (42b, 44b) qui fait saillie latéralement par rapport à la première partie de paroi du côté extérieur de celle-ci, de manière à recouvrir les attaches arrière, et
les deuxièmes parties (42b, 44b) de paroi latérale du capotage arrière ont sensiblement une forme de bosse et se raccordent aux premières parties (42a, 44a) de paroi latérale le long de lignes de raccordement incurvées (42c, 44c) s'étendant entre des points avant et des points arrière situés sensiblement au niveau des bords longitudinaux intérieurs des premières parties de paroi latérale.

2. Ensemble selon la revendication 1, **caractérisé en ce que** les deuxièmes parties (42b, 44b) de paroi latérale du capotage arrière (40) se raccordent aux premières parties (42a, 44a) de paroi latérale le long de lignes de raccordement incurvées (42c, 44c) s'étendant vers l'arrière jusqu'à des points arrière situés au niveau ou à proximité du bord extérieur de l'ouverture de la veine annulaire (15) d'écoulement du flux primaire.

3. Ensemble selon la revendication 2, **caractérisé en ce que** les deuxièmes parties de paroi latérale (42b, 44b) du capotage arrière (40) ont des profils incurvés de forme générale concave pour favoriser localement un écoulement du flux secondaire vers l'intérieur et sous la partie arrière du capotage arrière (40).

4. Ensemble selon l'une quelconque des revendications 1 à 3, **caractérisé en ce que** les deuxièmes parties (42b, 44b) de paroi latérale du capotage arrière (40) se raccordent aux premières parties (42a, 44a) de paroi latérale le long de lignes de raccordement (42c, 44c) à partir de points avant situés à proximité du capot primaire (30) sensiblement en regard du bord arrière du capot secondaire (32).

5. Ensemble selon l'une quelconque des revendications 1 à 4, **caractérisé en ce que** les deuxièmes parties (42b, 44b) de paroi latérale du capotage arrière (40) occupent moins de 2 % de l'éjection de la veine (13) d'écoulement du flux secondaire.

## Patentansprüche

1. Anordnung, umfassend ein Turbotriebwerk und ein System zur Befestigung des Turbotriebwerks an einer Flugzeugstruktur, Anordnung, bei der:
- das Turbotriebwerk (10) ein Zweistrom-Turbotriebwerk ist, mit einem ringförmigen Primärstrom-Strömungskanal (15), der sich rückseitig um einen mittleren Körper (17) herum öffnet, und einem ringförmigen Sekundärstrom-Strömungskanal (13), der sich rückseitig zwischen einer Primärhaube (30) und dem hinteren Ende einer Sekundärhaube (32) öffnet, und
- das Befestigungssystem (20) einen Mast (22), wenigstens zwei hintere Befestigungen (26), welche den Mast mit zwei hinteren Anschlussstellen (18) des Turbotriebwerks verbinden, sowie eine hintere Verkleidung (40) des Mastes umfasst, welche die hinteren Befestigungen abdeckt, eine aerodynamische Verkleidung ausbildet und einen hinteren Teil aufweist, der sich über die Öffnung des Primärstrom-Strömungskanals hinaus nach hinten erstreckt, wobei der Abstand zwischen den hinteren Anschlussstellen deutlich größer als die Breite des Mastes im Bereich der hinteren Befestigungen ist,
**dadurch gekennzeichnet, dass** die hintere Verkleidung zwei Seitenwände (42, 44) umfasst, die jeweils einen ersten Teil (42a, 44a), der sich entlang und in der Nähe des Mastes erstreckt und sich nach hinten fortsetzt, sowie einen zweiten Teil (42b, 44b) aufweisen, der gegenüber dem ersten Wandteil auf dessen Außenseite seitlich vorspringt, um die hinteren Befestigungen abzudecken, und
die zweiten Seitenwandteile (42b, 44b) der hinteren Verkleidung im Wesentlichen eine Buckelform aufweisen und an die ersten Seitenwandteile (42a, 44a) entlang gekrümmter Anschlusslinien (42c, 44c), die sich zwischen vorderen Punkten und hinteren Punkten, welche im Wesentlichen im Bereich der inneren Längsränder der ersten Seitenwandteile gelegen sind, erstrecken, angeschlossen sind.

2. Anordnung nach Anspruch 1, **dadurch gekennzeichnet, dass** die zweiten Seitenwandteile (42b, 44b) der hinteren Verkleidung (40) an die ersten Seitenwandteile (42a, 44a) entlang gekrümmter Anschlusslinien (42c, 44c), die sich bis zu hinteren Punkten, welche im Bereich oder in der Nähe des Außenrandes der Öffnung des ringförmigen Strömungskanals (15) des Primärstroms gelegen sind, nach hinten erstrecken, angeschlossen sind.

3. Anordnung nach Anspruch 2, **dadurch gekennzeichnet, dass** die zweiten Seitenwandteile (42b, 44b) der hinteren Verkleidung (40) gekrümmte Profile mit allgemein konkaver Form aufweisen, um ein Strömen des Sekundärstroms nach innen und unter den hinteren Teil der hinteren Verkleidung (40) lokal zu begünstigen.

4. Anordnung nach einem der Ansprüche 1 bis 3, **dadurch gekennzeichnet, dass** die zweiten Seitenwandteile (42b, 44b) der hinteren Verkleidung (40) an die ersten Seitenwandteile (42a, 44a) entlang von Anschlusslinien (42c, 44c) ausgehend von vorderen Punkten, die in der Nähe der Primärhaube (30) im Wesentlichen gegenüber dem hinteren Rand der Sekundärhaube (32) gelegen sind, angeschlossen sind.

5. Anordnung nach einem der Ansprüche 1 bis 4, **dadurch gekennzeichnet, dass** die zweiten Seitenwandteile (42b, 44b) der hinteren Verkleidung (40) weniger als 2 % des Ausstoßes des Strömungskanals (13) des Sekundärstroms belegen.

## Claims

1. An assembly comprising a turbine engine and an attachment system for attaching the turbine engine to an aircraft structure, in which assembly:
- the turbine engine (10) is a bypass engine with an annular passage (15) in which the core stream flows that opens out to the rear around a central body (17), and an annular passage (13) along which the bypass stream flows that opens out to the rear between a primary cover (30) and the rear end of a secondary cover (32); and
- the attachment system (20) comprises a mast (22), at least two rear attachments (26) connecting the mast to two rear attachment points (18) of the turbine engine, and a rear covering (40) of the mast covering the rear attachments, providing a streamlined fairing and having a rear portion that extends rearwards beyond the opening of the core stream flow passage, the distance between the rear attachment points being substantially greater than the width of the mast level with the rear attachments;
the assembly being **characterized in that** the rear covering has two side walls (42, 44) each having a first portion (42a, 44a) extending along and in the proximity of the mast and extended rearwards, and a second portion (42b, 44b) that projects sideways relative to the first wall portion on the outside thereof so as to cover the rear attachments; and
the second portions (42b, 44b) of the side wall of the rear covering are substantially in the form of bulges and they connect to the first portions (42a, 44a) of the side wall along curved connection lines (42c, 44c) extending between front points and rear points situated substantially level with the inner longitudinal edges of the first side wall portions.

2. An assembly according to claim 1, **characterized in that** the second side wall portions (42b, 44b) of the rear covering (40) are connected to the first side wall portions (42a, 44b) along curved connection lines (42c, 44c) extending rearwards as far as rear points situated at or in the proximity of the outer edge of the opening of the annular flow passage (15) for the core stream.

3. An assembly according to claim 2, **characterized in that** the second side wall portions (42b, 44b) of the rear covering (40) have curved profiles of generally concave shape to locally favor a flow of the bypass stream towards the inside and under the rear portion of the rear covering (40).

4. An assembly according to any one of claims 1 to 3, **characterized in that** the second side wall portions (42b, 44b) of the rear covering (40) are connected to the first side wall portions (42a, 44a) along connection lines (42c, 44c) from front points situated in the proximity of the primary cover (30) substantially facing the rear edge of the secondary cover (32).

5. An assembly according to any one of claims 1 to 4, **characterized in that** the second side wall portions (42b, 44b) of the rear covering (40) occupy less than 2% of the ejection of the flow passage (13) for the bypass stream.
